# EUROPEAN PATENT APPLICATION

(11) **EP 3 460 370 A1**
(43) Date of publication of application: **27.03.2019**
(21) Application number: 17192553.0
(22) Date of filing: 22.09.2017
(51) Int. Cl.: F26B 3/08, B01J 3/00, F26B 25/12, G02B 7/00

(54) **STEAM DRYER INSPECTION ASSEMBLY**

(71) Applicant: ASJ-IPR ApS, 2800 Kgs. Lyngby (DK)
(72) Inventor: SLOTH JENSEN, Arne, 2800 Kgs. Lyngby (DK)
(74) Representative: Budde Schou A/S

(57) **Abstract**

A steam dryer inspection assembly for covering an inspection aperture of an enclosure of a stream dryer for the drying of particulate material in superheated steam comprises a housing defining an interface aperture for facing the inspection aperture of the enclosure, and a user aperture opposite the interface aperture. The housing defines an inner space between the interface aperture and the user aperture, and the housing is preferably cylindrical. The steam dryer inspection assembly further comprises a back plate fixated to the housing and covering the user aperture, and a mounting arrangement, preferably a flange, extending outwardly from the housing at the interface aperture for mounting the inspection assembly onto the enclosure at the inspection aperture. Furthermore, a method of enhancing the safety of an existing steam dryer for the drying of particulate material in superheated steam is provided.

## Description

The present invention relates to a steam dryer inspection assembly for covering an inspection aperture of an enclosure of a stream dryer, steam dryers having such inspection assemblies and a related method.

### Background of the invention

Drying of moist bulk particulate material by contacting the particulate material with superheated steam under non-oxidizing conditions to evaporate liquid contained in the material has been known since the early 1980s. An early disclosure of the above-mentioned steam drying technologies includes EP 0 058 651 A1 which relates to a method of preparing cattle feed from various agricultural products, such as sugar beet pulp, molasses, citrus fruit pulp and peel and various fermentation products.

Another disclosure is EP 0 153 704 A2 which teaches a process of removing liquid from a particulate solid material in which the material is passed through a row of interconnected cells and superheated steam is introduced into said cells at their lower ends so as to impart a whirling movement during which dried panicles are lifted out of the cells and into a common transfer zone and into a discharge cell with no steam supply.

The prior art document WO 92/01200 discloses an apparatus for drying a moist particulate material having a non-uniform particle size with superheated steam. The apparatus comprises a cylindrical vessel comprising a number of parallel, substantially vertical drying chambers located in a ring form.

The prior art documents EP 0 955 511 A2, EP 1 044 044 A1 relate to methods and apparatus for the removal of liquid from particulate material by evaporation through the supply of superheated steam and using a fluid-bed, executed in a substantially closed system. The particulate material is supplied continuously to a process chamber and the superheated steam is introduced so that the particulate material is brought into movement by the superheated steam.

Further documents generally relating to stream dryers include: AT 345769 B, EP 0 268 819, , EP 1 070 223 A1, EP 1 956 326 B1, EP 2 457 649 A1, US 4 602 438, US 4 813 155, US 5 357 686 A, US 6 154 979 A, US 6 266 895, US 6 438 863 B1, US 6 966 466 B2, US 7 578 073 B2, WO 2010/139331 A2.

Typically, the steam dryers as described above have a number of upwardly open, elongated and substantially vertical processing cells which are placed around a central part with a heat exchanger. The last of these processing cells has a closed bottom and is the discharge cell, while the remainder have bottoms through which steam can permeate, thereby establishing a fluid bed for the drying of the particulate material. The steam is propelled by a blower situated below the processing cells. A dust separation cyclone is commonly present in the top of the steam dryer for the separation of the smallest particulate material (dust), which is to be ejected via a side cyclone, functioning as a dust ejector for removing the dust from the dust separation cyclone, and the steam which is to be circulated via the heat exchanger. The ejector is sometimes referred to as an auxiliary cyclone and transports the dust from the cyclone to the outlet cell.

Steam dryers of the fluid-bed type are necessarily constructed as closed systems allowing circulation of superheated steam having a pressure and temperature above ambient. Thus, the enclosure of the steam dryer only provides for an inlet for the moist particulate material, an outlet for the dry particulate material and a steam outlet for the release of excessive steam.

Access doors can be provided to allow for the entry of maintenance personnel into the steam dryer for maintenance, however, such doors cannot be used when the steam dryer is operating. Instead, a plurality of sight glasses can be provided for the visual inspection of the interior of the steam dryer when in operation, in particular the drying cells and the dust separation cyclone at which locations clogging of material may occur. Thereby the operation of the steam dryer may be monitored and controlled.

Sight glasses have been used in the prior art for monitoring the interior of pressurized vessels. A sight glass is understood as a transparent window hermetically sealing and covering an inspection aperture of an otherwise opaque enclosure though which aperture the interior of the enclosure may be observed.

US 2010/0146807 relates to a vapor atmosphere spray dryer and includes a closed-loop circuit having a dryer, a bag house filter system, a fan, and a heater system which are fluidly connected together for circulating a mass of superheated vapor there through. A plurality of manway access doors are be provided to allow for the entry of personnel into the pressure dome and the drying chamber for maintenance, for example, and a plurality of sight glasses can be provided for the ready visual inspection of the interiors of the pressure dome and the drying chamber.

The use of a sight glass has the advantage that the interior of the enclosure may be observed visually during operation, i.e when the interior of the steam dryer is pressurized. However, whereas the enclosure is made of a durable metal which is pressure, temperature and chock proof, the sight glass is made of a durable glass which is nevertheless much less durable than the rest of the enclosure. Thus there is a safety concern in case the sight glass breaks.

Steam dryers as described herein operate with high temperatures of above 100°C, high pressures of several bars, and high flow velocities capable of generating a fluid bed. Thus, a foreign object such as a piece of rock or a forgotten tool present within the steam dryer may potentially form a projectile and be hurdled towards the enclosure In case the foreign object hits the sight glass, it may break and scatter and a potentially dangerous situation will occur. In order to reduce the effects of such failure of the sight glass, a double sight glass may be used, i.e. two sight glasses arranged in a coaxial relationship.

CA 2034172 relates to an apparatus and method for measuring temperatures inside process vessels containing a hostile environment. The primary element of the safety system is the double sight glass spool piece. The primary sight glass and the secondary sight glass are separated by a small, sealed, gas-tight space which communicates with a side entry port for connection to a high pressure source of gas.

Further prior art includes US 4210120, which relates to a furnace peep port having a double sight glass, and, DE 2442740 relates to a safety sight glass system containing a double sight glass.

However, using a double sight glass may not be sufficient as also the second glass may break. Adding coaxial sight glasses does not necessarily add to the safety, and may reduce visibility.

It is thus an object of the present invention to provide technologies for enhancing the safety in connection with sight glasses and inspection apertures of steam dryers.

### Summary of the invention

The above object and further objects which are evident from the below detailed description are, according to a first aspect of the present invention, achieved by a steam dryer inspection assembly for covering an inspection aperture of an enclosure of a stream dryer for the drying of particulate material in superheated steam, the inspection assembly comprising:
a housing defining an interface aperture for facing the inspection aperture of the enclosure, and a user aperture opposite the interface aperture, the housing defining an inner space between the interface aperture and the user aperture, the housing preferably being cylindrical,
a back plate fixated to the housing and covering the user aperture, and
a mounting arrangement, preferably a flange, extending outwardly from the housing at the interface aperture for mounting the inspection assembly onto the enclosure at the inspection aperture.

The steam dryer is used for drying particular material in superheated steam at pressure above atmospheric pressure and temperatures above 100°C. The enclosure of the steam dryer is made of a rigid metal capable of withstanding such pressures and temperatures. In order to be able to observe the interior of the steam dryer, inspection apertures are provided in the enclosure. The inspection aperture is a throughgoing hole in the enclosure, typically circular. Since the steam dryer operates as a closed system (except for the necessary inlet of moist particulate material and respective outlets of steam and dry particulate material), the inspection aperture must be covered in a pressure tight manner, typically by a glass panel referred to as a sight glass. The inspection aperture is typically circular. Several inspection apertures/sight glasses are feasible.

The inspection assembly according to the present invention may be provided together with the steam dryer or supplied as an accessory to an existing steam dryer. Further, the mounting flange may be adapted to mount the inspection assembly to the enclosure to an inspection aperture including a sight glass or excluding a sight glass. The housing of the inspection assembly is typically made of rigid metal and will typically extend at least slightly outwardly in relation to the enclosure in order for allowing the assembly to be installed on an existing sight glass which typically is flush with the enclosure.

The housing is typically circular cylindrical, however, other shapes are feasible. The interface aperture of the housing is intended to face the inspection aperture from outside the sight glass, if present. The interface aperture typically match the inspection aperture. The user aperture is located opposite the interface aperture and faces away from the enclosure. The user aperture typically has a size matching the interface aperture. The mounting flange extends outwardly from the housing and allows the housing to be firmly mounted onto the enclosure.

The mounting flange is typically located adjacent the interface aperture and typically includes screw holes for bolting the inspection assembly into place at the inspection aperture on the outside of the enclosure. The mounting flange is typically made of rigid metal in order to keep the housing securely in place. The number of screw holes typically exceeds two.

In case of a malfunction of the existing sight glass (if present), the back plate will prevent any object or hot steam from the interior of the steam dryer from leaving the enclosure in an outwardly direction and cause possible danger to maintenance personnel and other persons in the vicinity of the steam dryer. The back plate covers the user aperture and may be located close to the interface aperture, such as 1-5 cm, or distant from the user aperture, such as 10-50 cm. A larger distance between the interface aperture and the back plate makes it less likely that a foreign object may reach through the housing to the back plate.

According to a further embodiment of the first aspect, the back plate is made of a temperature- and pressure resistant transparent material, preferably glass, such as borosilicate. In order to allow the interior of the steam dryer to be visually inspected by maintenance personnel on site, the back plate may be transparent. The back plate may thus be made of a durable transparent material such as borosilicate glass. This will increase the safety for the maintenance personnel inspecting the interior of the steam dryer.

According to a further embodiment of the first aspect, the back plate is made of a temperature- and pressure resistant non-transparent material, preferably metal, such as steel. Alternatively, for providing additional safety, the back plate may be made of a non-transparent material such as metal. In this way the back plate may be made equally durable as the enclosure, effectively preventing any object or steam from leaving the enclosure through the inspection aperture.

According to a further embodiment of the first aspect, the back plate is removable. In case the back plate is transparent, the back plate may be removable for cleaning and replacement purposes. In case the back plate is non-transparent, the back plate may be removable for allowing the interior of the steam dryer to be visually inspected for a short time period though an existing sight glass, where after the back plate is replaced. The back plate may be fastened e.g. by means of wingnuts or latch clamps.

According to a further embodiment of the first aspect, the housing comprises an outlet vent for providing fluid communication between the inner space and the outside of the inspection assembly, the outlet vent preferably including a one-way valve, more preferably an overpressure valve. In this way, in case the existing sight glass fails, the pressurized steam from inside the steam dryer which will then be applied to the back plate and the housing, may be directed in a direction facing away from the maintenance operators, e.g. in an upwardly, sideward or downwardly direction. Further, the pressure onto the back plate will be reduced. A one-way valve may be used for preventing air from entering the housing, Further, the one-way valve may be used as an overpressure for allowing a small pressure buildup inside the housing, reducing the pressure applied to the existing sight glass.

According to a further embodiment of the first aspect, the housing further comprises an inlet vent connectable to a fluid supply for supplying a fluid to the inner space for pressurizing and/or cooling of the inner space, the fluid preferably being a gas such as air. In this way, the inner space may be pressurized, e.g. to between 25%-75%, preferably about 50%, of the pressure within the steam dryer. This will reduce the pressure applied to the existing sight glass, reducing the likelihood of a rupture. Further, the fluid, preferably a gas such as air, may be continuously supplied or circulated through the inner space and out via the outlet vent in order to provide cooling to the inner space and possible electrical equipment therein, such as cameras and light sources.

According to a further embodiment of the first aspect, the housing further comprises a camera located within the inner space and oriented towards the interface aperture, the camera preferably being a CCTV camera or video camera, more preferably a digital camera. The camera may alternatively be a camera not intended for visual light such as a heat camera. The camera should be oriented such that it captures at least a part of the interior of the steam dryer. By using a camera, the interior of the steam dryer may be remotely inspected, without any person present in the vicinity of the steam dryer. The back plate may thus be non-transparent, e.g. made of durable metal.

According to a further embodiment of the first aspect, the inspection assembly further comprises a light source oriented towards the interface aperture, the light source may be located outside the cylindrical housing, however, a placement within the cylindrical housing is also feasible. A light source, such as a lamp, may be used to enhance light conditions within the enclosure in order to make a visual inspection easier. The light source may preferably be used in conjunction with a camera. The light source may be located within the inner space, however, in order to prevent reflections, the light source may be located outside the housing, either connected to the mounting flange adjacent the housing and oriented towards the same inspection aperture, or alternatively as a separate entity oriented towards a separate inspection aperture. Multiple light sources may be used.

According to a further embodiment of the first aspect, the mounting arrangement and/or the back plate define a non-right angle relative to the orientation of the housing. In this way the inspection assembly may be mounted on a sloping surface of the enclosure, such as adjacent the top or the bottom of the enclosure. It may also be pointing towards a specific part of the interior of the steam dryer, such as the ejector.

The above object and further objects, which are evident from the below detailed description, are according to a second aspect of the present invention achieved by , a sight glass assembly comprising a steam dryer inspection assembly according to any of the preceding claims, the housing further comprises a transparent and/or aperture front plate for covering the interface opening. In this way the inspection aperture may be made smaller than the housing/interface aperture. A smaller aperture/sight glass is less prone to be ruptured. Telescopic lenses or similar optics may be used for enhancing the view of the interior of the steam dryer.

According to a further embodiment of the second aspect, the inspection assembly comprises a hollow part extending from a first end within the inner space through the front plate to a second end outside the inner space and defining an optical path between and through the first and second ends, the extension part being closed-off by a transparent plate, preferably at the first end and/or the second end, the transparent plate preferably being made of temperature- and pressure resistant glass, such as borosilicate. The extension part may be oriented towards a particular part of specific interest of the interior of the steam dryer, such as the side cyclone. Telescopic lenses or similar optics may be used for enhancing the view of the interior of the steam dryer and specifically any particular part. The extension part preferably extends into the interior of the enclosure and preferably the extension part has a circumference being smaller than the circumference of the housing. In this way the risk of rupture is reduced.

According to a further embodiment of the second aspect, the front plate is at least partially made of a temperature- and pressure resistant glass, such as borosilicate. In this way the inspection assembly may be installed in an enclosure of e.g. a new steam dryer which is not already fitted with a sight glass.

The above object and further objects, which are evident from the below detailed description, are according to a third aspect of the present invention achieved by a steam dryer having an enclosure enclosing a dust separation cyclone, the enclosure comprising:
an inspection aperture located adjacent the dust separation cyclone for allowing the dust separation cyclone to be visually observed, and
an inspection assembly according to the first aspect covering the inspection aperture.

The steam dryer according to the third aspect may preferably be of the type described herein and operating with superheated steam and having a dust separation cyclone which may be observed via an inspection aperture/sight glass, preferably situated on the side of the enclosure. The inspection assembly may be any of the assemblies described under the first aspect.

The above object and further objects, which are evident from the below detailed description, are according to a fourth aspect of the present invention achieved by a steam dryer for the drying of particulate material in superheated steam having an enclosure enclosing a dust separation cyclone and a side cyclone, the side cyclone having a dust inlet and a dust outlet, the enclosure comprising:
an inspection aperture located adjacent the side cyclone for allowing the side cyclone to be visually observed, the inspection aperture preferably being located adjacent the dust inlet, more preferably above the dust inlet, and
an inspection assembly according to any of the above embodiments covering the inspection aperture.

The steam dryer according to the fourth aspect may preferably be of the type described herein and operating with superheated steam and having a dust separation cyclone and an ejector for ejecting the dust, which ejector may be observed via an inspection aperture/sight glass, preferably situated on the top of the enclosure. The inspection assembly may be any of the assemblies described under the first aspect.

The above object and further objects, which are evident from the below detailed description, are according to a fifth aspect of the present invention achieved by a method of enhancing the safety of an existing steam dryer for the drying of particulate material in superheated steam, the steam dryer having an enclosure including an inspection aperture, the inspection aperture optionally comprising a sight glass, the method comprising:
providing an inspection assembly comprising:
   a housing defining an interface aperture and a user aperture opposite the interface aperture, the housing defining an inner space between the interface aperture and the user aperture,
   a back plate fixated to the housing and covering the user aperture, and
   a mounting arrangement, such as a flange, extending outwardly from the housing at the
interface aperture,
covering the inspection aperture by positioning the inspection assembly so that the interface aperture is facing the inspection aperture, and,
mounting the inspection assembly onto the enclosure at the inspection aperture by using the mounting arrangement.

The above method may be used together with any of the embodiments of the firstto fourth aspects for retrofitting an existing steam dryer.

### Brief description of the drawings

FIG. 1 illustrates a side sectional view of a steam dryer for drying bulk particulate material, in particular drying of beet pulp.
FIG. 2A illustrates a side sectional view of an inspection assembly according to a first embodiment having an angled back plate and an outlet vent.
FIG. 2B illustrates a rear view of an inspection assembly according to an alternate first embodiment having a removable back plate and an outlet vent.
FIG. 2C illustrates a side sectional view of an inspection assembly according to an alternate first embodiment having a removable back plate and an outlet vent.
FIG. 3A illustrates a front view of an inspection assembly according to a second embodiment having a vent.
FIG. 3B illustrates a side sectional view of the inspection assembly having a vent.
FIG. 4A illustrates a front view of the inspection assembly according to a third embodiment having a removable back plate.
FIG. 4B illustrates a side sectional view of the inspection assembly according to a third embodiment having a removable back plate.
FIG. 4C illustrates a side sectional view of the inspection assembly when the back plate has been removed.
FIG. 4D illustrates a side sectional view of the inspection assembly when the back plate has been reinserted.
FIG. 5A illustrates a front view of the inspection assembly according to a fourth embodiment having a removable back plate.
FIG. 5B illustrates a side sectional view of the inspection assembly according to a fourth embodiment having a removable back plate.
FIG. 5C illustrates a side sectional view of the inspection assembly when the back plate has been removed.
FIG. 6A illustrates a perspective view of an inspection assembly according to a fifth embodiment having a camera.
FIG. 6B illustrates another perspective view of an inspection assembly according to a fifth embodiment having a camera.
FIG. 6C illustrates a rear view of the inspection assembly according to a fifth embodiment having a camera.
FIG. 6D illustrates a cut-out view of the inspection assembly according to a fifth embodiment having a camera.
FIG. 7A shows a top view of the inspection assembly according to a sixth embodiment particular suitable for being placed at the top of the steam dryer.
FIG. 7B shows a cut-out view of the inspection assembly according to a sixth embodiment particular suitable for being placed at the top of the steam dryer.

### Detailed description of the drawings

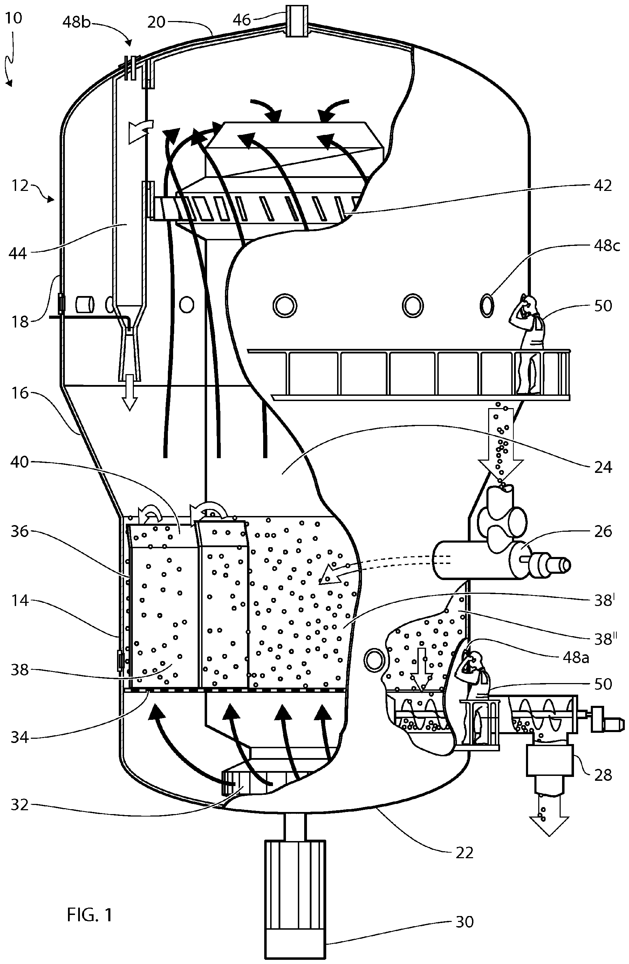

FIG. 1 shows a side sectional view of an apparatus 10 for drying bulk particulate materials, in particular drying of beet pulp. The apparatus 10 comprises a vessel 12 having an enclosure comprising a lower cylindrical part 14, an intermediate conical part 16 and an upper cylindrical part 18. The vessel 12 is closed off by a top 20 and a bottom 22 also forming part of the enclosure of the vessel 12. The interior of the vessel 12 further comprises an inner cylindrical part 24 extending within the vessel 12 between the upper cylindrical part 18 and the lower cylindrical part 14. The inner cylindrical part 24 includes a heat exchanger (not visible) and defines a first fluid path from said upper cylindrical part 18 to said lower cylindrical part 14 within said inner cylindrical part 24 and a second fluid path from said lower cylindrical part 14 to said upper cylindrical part 18 outside said inner cylindrical part, as shown by the arrows. Fluids should in the present context be construed to include gasses and liquids.

The vessel 12 further comprises an inlet 26 constituting a screw conveyor for introducing moist particulate material into the lower cylindrical part 14 of the vessel 12 as shown by the arrow, and an outlet 28 constituting a screw conveyor for transporting dry particulate material from the lower cylindrical part 14 of the vessel 12 as shown by the arrow. The inlet 26 is located above and circumferentially shifted relative to the outlet 28. A motor 30 is located below the vessel 12 for driving an impeller 32 located in the lower cylindrical part 14 below the inner cylindrical part 24. The impeller 32 generates a flow of superheated steam along the above-mentioned fluid paths. A steam permeable bottom 34 is located above the impeller 32.

A number of partitioning walls 36 are radially extending between the lower cylindrical part 14 and the inner cylindrical part 24 and dividing the space between the lower cylindrical part 14 and the inner cylindrical part 24 into a number of chambers 38. The chamber located at the inlet 26 is designated inlet chamber 38^{I} and the chamber located at the outlet 28 is designated outlet chamber 38". Typically, the inlet chamber 38^{I} and the outlet chamber 38" are located adjacent each other, however, the particulate material should not be able to move directly from the inlet chamber 38^{I} to the outlet chamber 38" without passing the intermediate chambers 38. The moist particulate material is received in the inlet chamber 38^{I} on a fluid bed established by the flow of superheated steam above the steam permeable bottom 34. The partitioning walls 36 include whirling blades 40 for inducing a circumferential whirl for transporting the particulate material from the inlet chamber 38^{I} to the outlet chamber 38" via the intermediate chambers 38 as shown by the arrows. The outlet chamber 38" has a non-permeable bottom which allows the dried particulate material to be ejected via the outlet 28 as shown by the arrow.

The upper cylindrical part 18 of the vessel 12 comprises a cyclone formed by guide blades 42 for generating a cyclone field in upper cylindrical part 18. The guide blades 42 will establish a whirling movement of the flow of superheated steam corresponding to the above-mentioned circumferential whirl and force substantially any particles outwardly which have been lifted from the lower cylindrical part 14 through the intermediate conical part 16 into the upper cylindrical part 18. The outwardly forced particles will be collected in a side cyclone 44 and returned to the lower cylindrical part 14 as shown by the arrows. The superheated steam will be introduced into the inner cylindrical part 24 and be reheated by the heat exchanger before returning to the impeller 32. A small portion of the superheated steam will escape the vessel 12 via a centrally located steam exit 46. The superheated steam exiting the vessel 12 is subsequently condensed in an evaporator.

The drying of the moist particulate material is effected on the fluid bed above the steam permeable bottom of the inlet chamber 38^{I} and the intermediate chamber 38. Each chamber 38 may include further blades or similar means for establishing a whirling flow in the radial direction of the chamber 38. The whirling flow will increase the distribution of the particulate material within the chambers 38 and thereby increase the contact between the superheated steam and the particulate material, thereby increasing the vaporization of fluid from the particulate material and improving the drying.

Inspection apertures 48 are located at various locations of the vessel 12. Preferably, but not exclusively, inspection apertures 48a are located at the lower cylindrical part 14 surrounding the vessel 12 for inspecting the guide blades of the cyclone. A further inspection aperture 48b may be located at the top 20 for inspecting the side cyclone 44. The inspection aperture 48b is preferably fitted with a video camera. Optionally, further inspection apertures 48c are provided at further locations such as at the upper cylindrical part 18. The inspection apertures 48a, 48b, 48c will be provided with a sight glass and/or an inspection assembly. For comparison, a mannequin 50 representing a maintenance technician is shown.

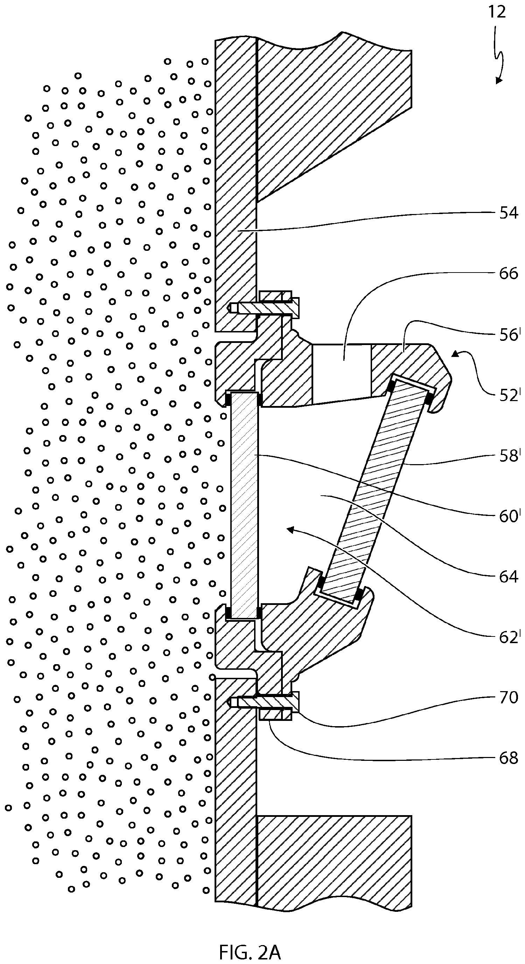

FIG. 2A shows a side sectional view of an inspection assembly 52^{I} according to a first embodiment for being fitted on an enclosure 54 making up the vessel 12. The enclosure 54 comprises an inspection aperture, which is covered by the inspection assembly 52^{I}. The inspection assembly 52^{I} comprises a housing 56^{I} having a back plate 58^{I} facing the user and situated at a user oriented aperture in the housing 56^{I}.

Further, the present embodiment includes a sight glass 60^{I} covering the inspection aperture of the enclosure 54. The inspection assembly 52' may be provided without the sight glass 60^{I} for being installed at an already existing sight glass 60^{I} which form part of the enclosure 54 or alternatively for new installations a sight glass assembly is provided in which the sight glass 60^{I} is provided together with the inspection assembly 52^{I}. The housing is mounted having an interface aperture 62^{I} facing the inspection aperture for establishing an inner space 64 between the sight glass 60^{I} and the back plate 58^{I}.

The back plate 58^{I} in the present embodiment defines an non-right angle in relation to the direction of the housing 56^{I}, i.e. the back plate defines a non-zero angle in relation to the sight glass 60^{I}. The back plate 58^{I} and the sight glass 60^{I} in the present embodiment are both made of borosilicate glass or any similar glass allowing maintenance personnel to inspect the interior of the vessel 12.

The housing further comprises an outlet vent 66 facing upwards, but which in principle may face any direction. In case the sight glass 60 ruptures, any steam or any other objects escaping from the vessel 12 will enter the inner space 64 and escape via the outlet vent 66 instead of being directed towards the user, which would have been the case when only using a single sight glass. The back plate 58^{I} has a tilted angle which further aids the re-direction of the escaping steam in the upwards direction instead of towards the user.

The inspection assembly 52^{I} further comprises a mounting flange 68 connected to the housing 52^{I} and extending outwardly for mounting the inspection assembly 52^{I}. The mounting flange 68 comprises screw holes for mounting the inspection assembly 52^{I} onto the enclosure 54 using bolts 70. The bolts 70 used for fixating the mounting flange 68 may, as in the present embodiment, be the same bolts as used for the sight glass 60^{I}, or different bolts may be used. It is of course contemplated that other fixation means than bolts may be used.

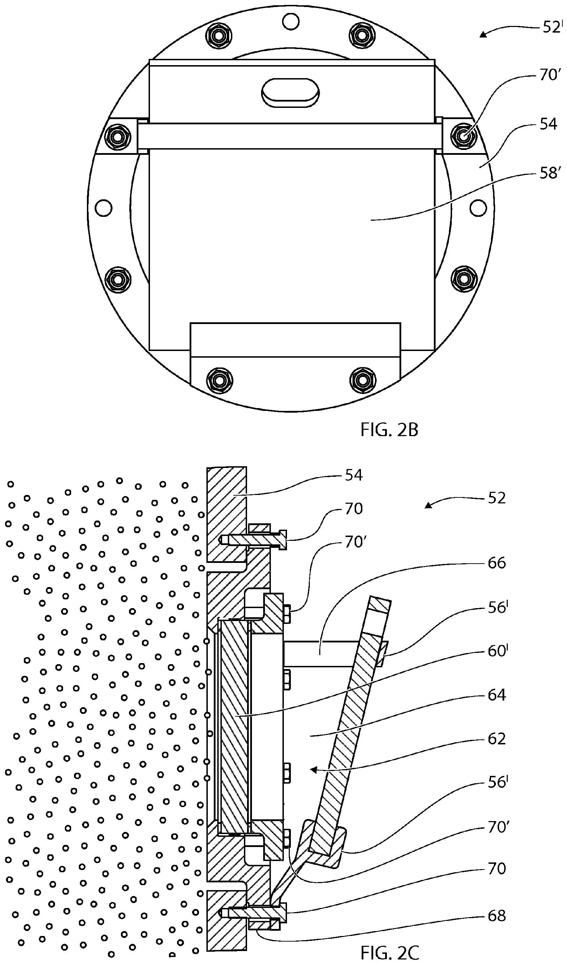

FIG. 2B shows a rear view of a slight variation of the inspection assembly 52^{I} according to a first embodiment for being fitted on an enclosure 54 making up the vessel 12. The enclosure 54 comprises an inspection aperture, which is covered by the inspection assembly 52^{I}. The inspection assembly 52^{I} comprises a housing 56^{I} having a back plate 58^{I} facing the user and situated at a user oriented aperture in the housing 56^{I}

The back plate 58^{I} in the present embodiment defines a non-right angle in relation to the direction of the housing 56^{I}, i.e. the back plate defines a non-zero angle in relation to the sight glass 60^{I}. The back plate 58^{I} in the present embodiment is made of steel or any similar metal or equally rigid material, which protects the surroundings in case the sight glass (not visible in the present view) ruptures. When maintenance personnel wish to inspect the interior of the vessel 12, the back plate 58^{I} is temporarily removed and then replaced when the inspection is over.

FIG. 2C shows a side sectional view of the inspection assembly of FIG. 2B. The present view includes the sight glass 60^{I} covering the inspection aperture of the enclosure 54. The housing further comprises an outlet vent 66 similar to FIG. 2A. In the present embodiment, different bolts 70 70^{I} are used for fastening the sight glass 60^{I} and the mounting flange 68. It is of course contemplated that other fixation means than bolts may be used.

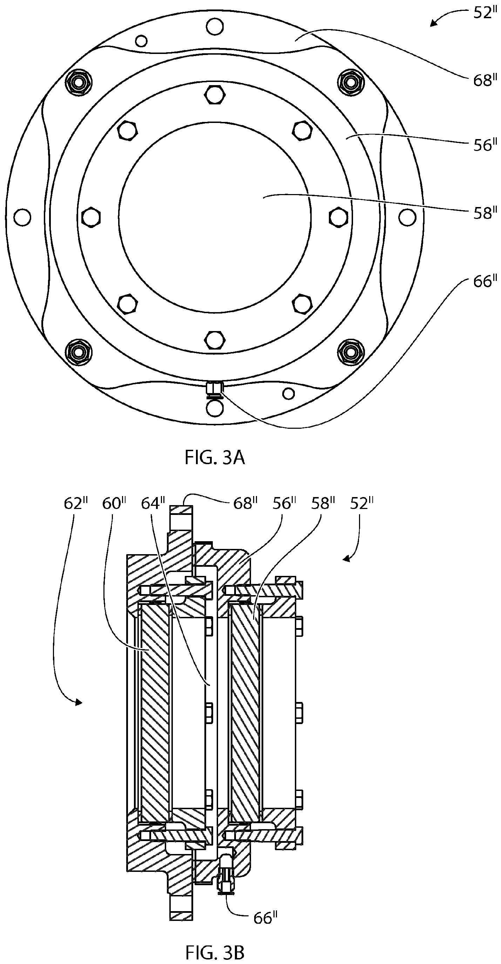

FIG. 3A shows a front view of an inspection assembly 52" according to a second embodiment similar to the previous embodiment for being fitted around an inspection aperture (not shown) on an enclosure (not shown) making up the vessel (not shown).

FIG. 3B shows a side sectional view of the inspection assembly 52". The inspection assembly 52" comprises a housing 56" having a back plate 58" for facing the user and situated at a user aperture in the housing 56". Further, the present embodiment includes a sight glass 60" for covering the inspection aperture. The sight glass 60" may form part of the enclosure or the inspection assembly 52". The housing is mounted having an interface aperture 62" for facing the inspection aperture and establishing an inner space 64" between the sight glass 60" and the back plate 58". The inspection assembly 52" further comprises a mounting flange 68" connected to the housing 52" and extending outwardly for mounting the inspection assembly 52".

The back plate 58" and the sight glass 60" in the present embodiment are both preferably made of borosilicate glass or any similar glass allowing maintenance personnel to inspect the interior of the vessel. The housing further comprises a vent 66" facing downwards. The present vent 66" may be an overpressure valve, which may be connected to a source of pressurized gas in order to allow a pressure to be build up in the inner space 64", e.g. a pressure between 25%-75% of the pressure within the steam dryer. The pressure lowers the stress on the sight glass 60^{I}. The back plate 58" prevents any other objects from escaping the vessel.

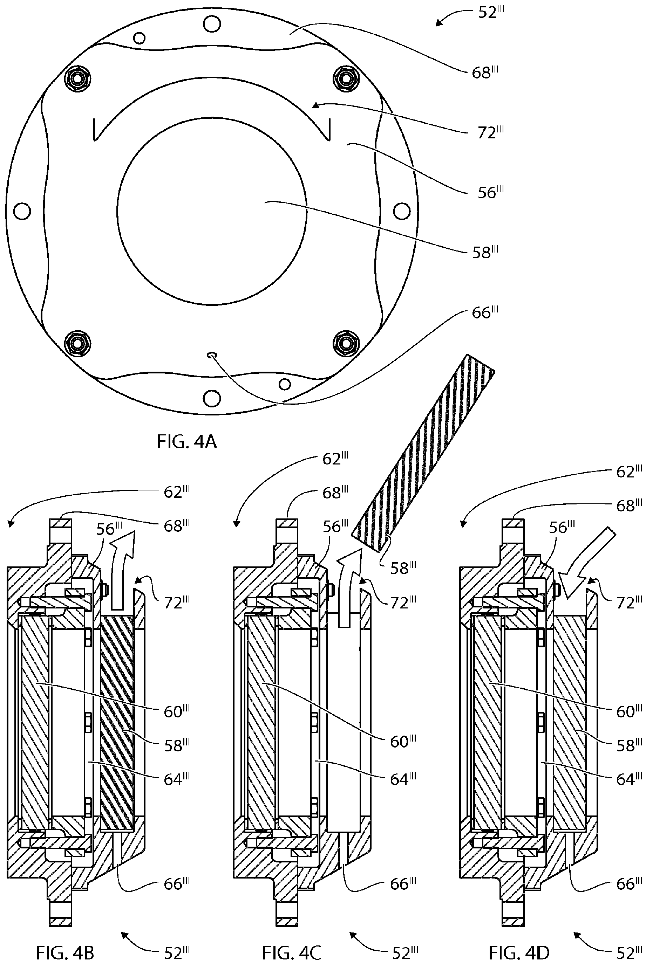

FIG. 4A shows a front view of the inspection assembly 52^{III} according to a third embodiment similar to the previous embodiment for being fitted around an inspection aperture (not shown) on an enclosure (not shown) making up the vessel (not shown).

FIG. 4B shows a side sectional view of the inspection assembly 52^{III}. The inspection assembly 52^{III} comprises a housing 56^{III} having a back plate 58^{III} for facing the user and situated at a user aperture in the housing 56^{III}. The back plate 58^{III} is removably fitted in a slot 72. Further, the present embodiment includes a sight glass 60^{III} for covering the inspection aperture. The sight glass 60^{III} made of borosilicate glass or any similar glass may form part of the enclosure or the inspection assembly 52^{III}. The housing is mounted having an interface aperture 62^{III} for facing the inspection aperture and establishing an inner space 64^{III} between the sight glass 60^{III} and the back plate 58^{III}. The inspection assembly 52^{III} further comprises a mounting flange 68^{III} connected to the housing 52^{III} and extending outwardly for mounting the inspection assembly 52^{III}. As mentioned above, other mounting means may be used, such as clips etc.

FIG. 4C shows a side sectional view of the inspection assembly 52^{III} when the back plate 58^{III} has been removed. The back plate 58^{III} is made of a durable opaque material such as steel, and is temporarily removed for the purpose of inspecting the interior of the steam dryer. Thus, under normal operation the sight glass 60^{III} is covered by the durable back plate 58^{III} which will prevent any steam or any other objects from escaping the vessel. Thus, during critical moments such as start-up of the steam dryer, the back plate 58^{III} is fitted in the slot 72 for safety reason. Once the drying process has started one or more back plates 58^{III} may be temporarily removed for allowing inspection of the interior of the steam dryer.

In an alternative embodiment, the back plate 58^{III} and the sight glass 60^{III} may both be made of borosilicate glass or any similar glass or steel allowing maintenance personnel to inspect the interior of the vessel, and the back plate 58^{III} being removable solely for maintenance purposes.

FIG. 4D shows a side sectional view of the inspection assembly 52^{III} when the back plate 58^{III} has been reinserted. It is contemplated that the back plate 58^{III} may be sealed and/or locked in place.

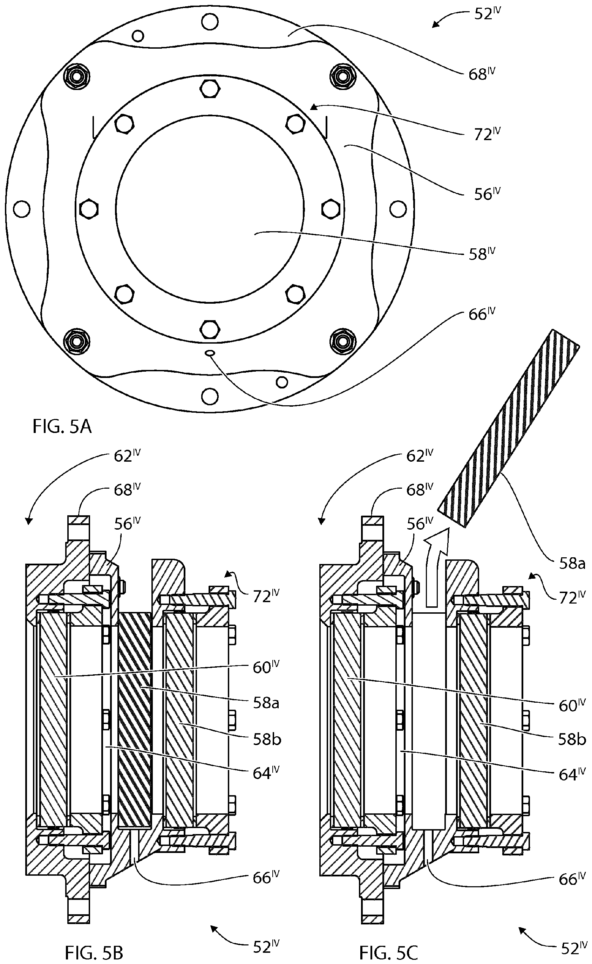

FIG. 5A shows a front view of the inspection assembly 52^{IV} according to a fourth embodiment similar to the previous embodiment for being fitted around an inspection aperture (not shown) on an enclosure (not shown) making up the vessel (not shown).

FIG. 5B shows a side sectional view of the inspection assembly 52^{IV}. The inspection assembly 52^{IV} comprises a housing 56^{IV} having a primary back plate 58a and a secondary back plate 58b. The primary back plate 58a is made of a durable opaque material such as steel and is removably fitted in a slot 72^{IV}. The secondary back plate 58b made of borosilicate glass or any similar glass is situated at a user aperture in the housing 56^{IV} for facing the user. Further, the present embodiment includes a sight glass 60^{IV} for covering the inspection aperture. The sight glass 60^{IV} made of borosilicate glass or any similar glass may form part of the enclosure or the inspection assembly 52^{IV}. The housing is mounted having an interface aperture 62^{IV} for facing the inspection aperture and establishing an inner space 64^{IV} between the sight glass 60^{IV} and the primary back plate 58a. The inspection assembly 52^{IV} further comprises a mounting flange 68^{IV} connected to the housing 52^{IV} and extending outwardly for mounting the inspection assembly 52^{IV}.

FIG. 5C shows a side sectional view of the inspection assembly 52^{IV} when the primary back plate 58b has been removed. The primary back plate 58^{IV} may be temporarily removed for the purpose of inspecting the interior of the steam dryer. Thus, under normal operation the sight glass 60^{IV} is covered by the durable primary back plate 58a which will prevent any steam or any other objects from escaping the vessel. Thus, during critical moments such as start-up of the steam dryer, the primary back plate 58a is fitted in the slot 72^{IV} for safety reason. Once the drying process has started one or more primary back plates 58a may be temporarily removed for allowing inspection of the interior of the steam dryer, while the secondary back plate 58b provides reasonable protection for the user while the primary back plates 58a are removed.

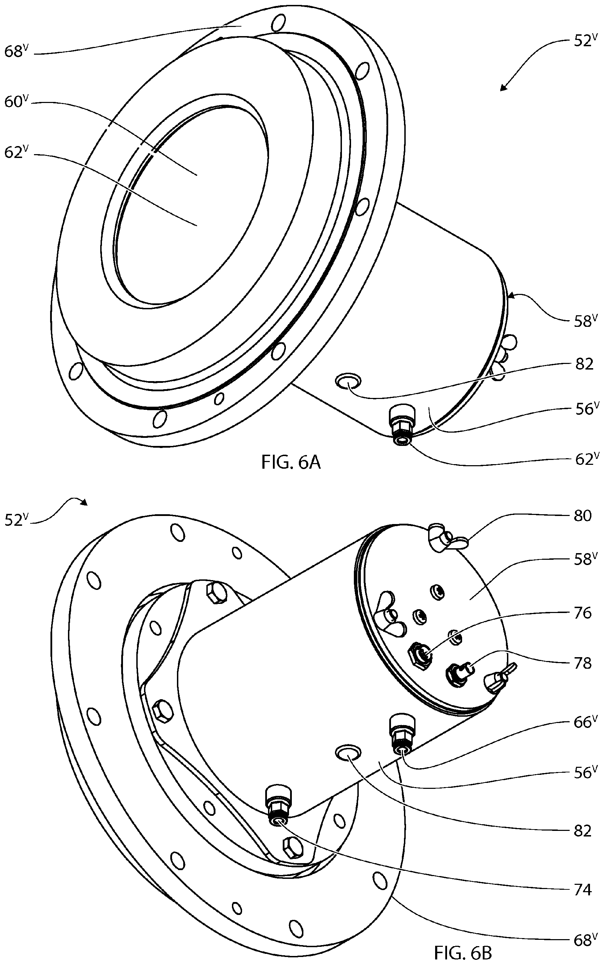

FIG. 6A shows a perspective view of an inspection assembly 52^{V} according to a fifth embodiment. The inspection assembly 52^{V} comprises a housing 56^{V} having a back plate 58^{V} for facing the user and situated at a user aperture in the housing 56^{V}. Further, the present embodiment includes a sight glass 60^{V} made of borosilicate glass or any similar glass for covering the inspection aperture. The sight glass 60^{V} may form part of the enclosure or the inspection assembly 52^{IV}. The housing is mounted having an interface aperture 62^{V} for facing the inspection aperture and establishing an inner space between the sight glass 60^{V} and the back plate 58^{V}. The inspection assembly 52^{V} further comprises a mounting flange 68^{V} connected to the housing 52^{V} and extending outwardly for mounting the inspection assembly 52^{V}. The back plate 58^{V} is made of metal and is therefore opaque. The inner space may comprise a camera (not shown) and/or similar electrical equipment for remote inspection of the interior of the vessel.

FIG. 6B shows another perspective view of an inspection assembly 52^{V}. The housing 56^{V} further comprises an inlet vent 74 and an outlet vent 66^{V} which are connectable to a gas supply or compressor for circulating air though the inner space of the housing 56^{V}. The compressed air may be used for cooling the camera or other electrical equipment within the inner space of the housing 56^{V}. Further, the compressed air may allow a pressure to be build up in the inner space, e.g. a pressure between 25%-75%, or even up to 100% of the pressure within the steam dryer, for reducing the stress on the sight glass 60^{V}.

The housing 56^{V} further comprising a data port 76^{V} for allowing transfer of data and/or video between the camera and/or other equipment inside the housing 56^{V} and the outside. It is contemplated that wireless communication may be used in place of the data port. The housing 56^{V} further comprises a power port 78^{V} for powering the camera and/or other equipment inside the housing 56^{V}. It is contemplated that batteries may be used in place of the power port.

The back plate 58^{V} may be removed using fastening devices 80 in the form of wing nuts for accessing the camera and/or other equipment inside the housing 56^{V}. An optional indicator 82 may be used for increasing the safety. The indicator 82 may indicate in case a critical overpressure inside the housing occurs, e.g. due to a rupture of the sight glass..

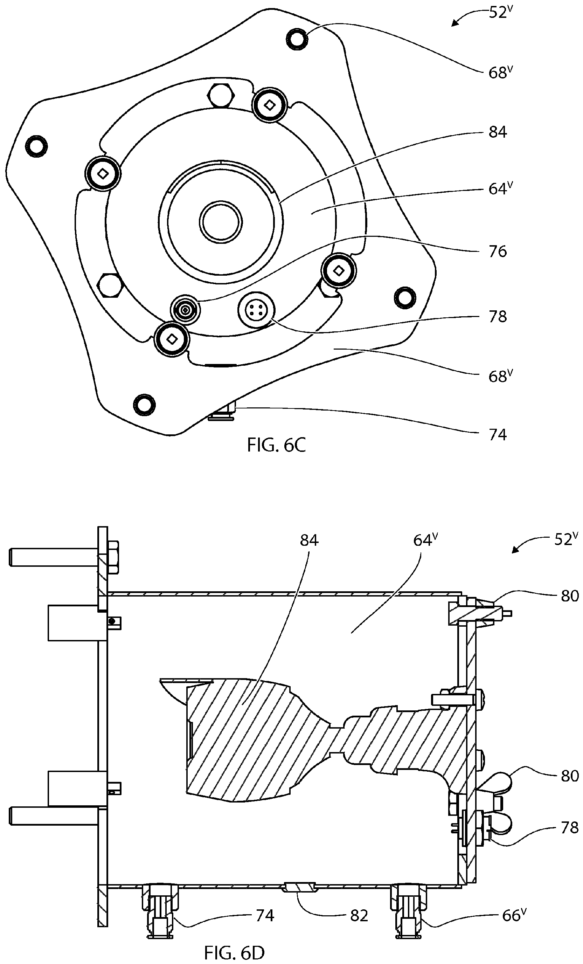

FIG. 6C shows a rear view of the inspection assembly 52^{V}. This view shows the data port 76^{V} and the power port 78^{V}. The present view also shows the mounting flange 68^{V} comprising screw holes for mounting the inspection assembly 52^{V} onto the enclosure.

FIG. 6D shows a cut-out view of the inspection assembly 52^{V} exposing the inner space 64^{V}. The inner space 64^{IV} includes a camera 84 facing the sight glass 60^{V}.

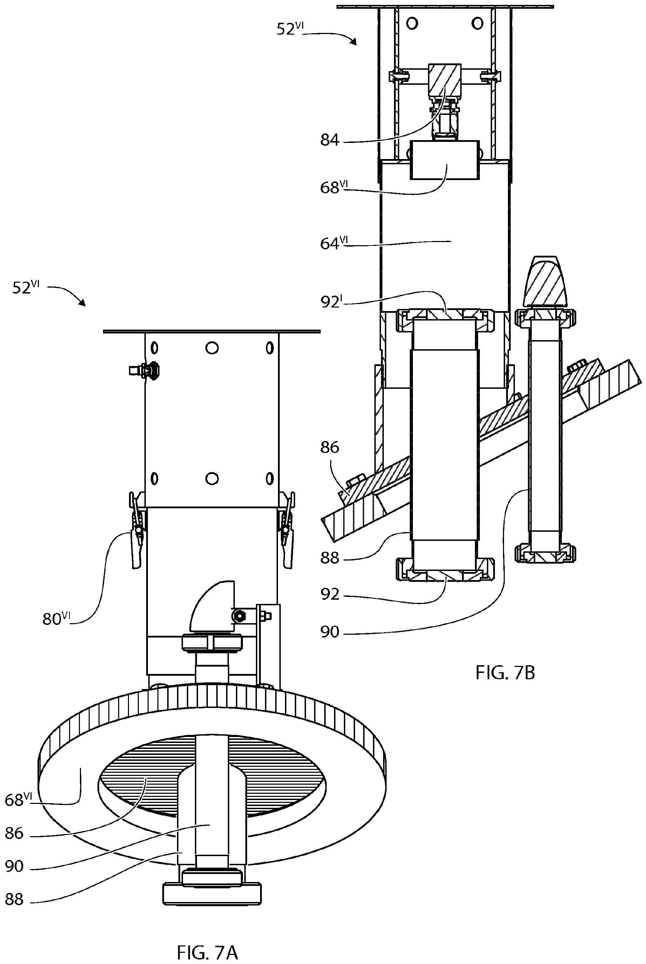

FIG. 7A shows a top view of the inspection assembly 52^{VI} according to a sixth embodiment. The present embodiment is particular suitable for being placed at an inspection aperture (not shown) at the top of the steam dryer for inspecting the side cyclone of the steam dryer. The inspection assembly 52^{VI} comprises a housing 56^{VI} having a back plate 58^{VI} for facing the user and situated at a user aperture in the housing 56^{VI}. The back plate is fastened to the housing 56^{VI} by means of fastening device 80^{I}, which in the present embodiment are latch clamps. It is contemplated that alternative fastening means are feasible.

Further, the present embodiment includes a steel front plate 86 for covering the inspection aperture. The front plate 86 may form part of the enclosure or the inspection assembly 52^{VI}. The housing is mounted having an interface aperture 62^{VI} for facing the inspection aperture and establishing an inner space between the front plate 86 and the back plate 58^{VI}. The interface aperture 62^{VI} and thus the steel front plate 86 and the mounting flange 68^{VI} define a non-right angle in relation to the extension of the housing 56^{VI} for easy mounting on the slope part of the enclosure at the top of the steam dryer (not shown).

The inner space may comprise a camera (not shown in the present view, however, generally designated the reference numeral 84) and/or similar electrical equipment for remote inspection of the interior of the vessel. Further, an extension part 88 extends from the inner space and through the front plate 86 and provides an optical path into the steam dryer vessel. Yet further, a light source 90, such as a lamp, extends beside the extension part 88 but outside the housing 56^{VI} for illuminating the interior of the steam dryer. In this way, the risk of light reflection is reduced. The light source 90 is connected to the mounting flange 68^{VI}.

FIG. 7B shows a cut-out view of the inspection assembly 52^{VI} exposing the inner space 64^{VI}. The inner space 64^{VI} includes a camera 84 facing the extension part 88. The extension part 88 includes small sight glasses 92 92^{I} made of bare borosilicate glass e.g. for observing the side cyclone, however, optionally, the sight glasses 92 92^{I} may constitute lenses for providing a magnified or zoomed image of the interior of the steam dryer.

The specific embodiments shown above are construed to be examples of enabling embodiments, and it is understood that a skillful individual would be able to derive numerous further combinations of the above inspection assembly without departing from the general inventive concept.

**List of parts with reference to the figures**

| | |
|---|---|
| 10. Apparatus for drying bulk particulate material | 52. Inspection assembly |
| 12. Vessel | 54. Enclosure |
| 14. Lower cylindrical part | 56. Housing |
| 16. Intermediate conical part | 58. Back plate |
| 18. Upper cylindrical part | 60. Sight glass |
| 20. Top | 62. Interface aperture |
| 22. Bottom | 64. Inner space |
| 24. Inner cylindrical part | 66. Outlet vent |
| 26. Inlet | 68. Mounting flange |
| 28. Outlet | 70. Bolt |
| 30. Motor | 72. Slot |
| 32. Impeller | 74. Inlet vent |
| 34. Steam permeable bottom | 76. Video port |
| 36. Partitioning walls | 78. Power port |
| 38. Chambers | 80. Fastening device |
| 40. Whirling blades | 82. Safety valve |
| 42. Guide blades | 84. Camera |
| 44. Side cyclone | 86. Front plate |
| 46. Steam exit | 88. Extension part |
| 48. Inspection aperture | 90. Light source |
| 50. Mannequin | 92. Small sightglass |

## Claims

1. A steam dryer inspection assembly for covering an inspection aperture of an enclosure of a stream dryer for the drying of particulate material in superheated steam, said inspection assembly comprising:
a housing defining an interface aperture for facing said inspection aperture of said enclosure, and a user aperture opposite said interface aperture, said housing defining an inner space between said interface aperture and said user aperture, said housing preferably being cylindrical,
a back plate fixated to said housing and covering said user aperture, and
a mounting arrangement, preferably a flange, extending outwardly from said housing at said interface aperture for mounting said inspection assembly onto said enclosure at said inspection aperture.

2. The steam dryer inspection assembly according to claim 1, wherein said back plate is made of a temperature- and pressure resistant transparent material, preferably glass, such as borosilicate.

3. The steam dryer inspection assembly according to claim 1, wherein said back plate is made of a temperature- and pressure resistant non-transparent material, preferably metal, such as steel.

4. The steam dryer inspection assembly according to any of the preceding claims, wherein said back plate is removable.

5. The steam dryer inspection assembly according to any of the preceding claims, wherein said housing comprising an outlet vent for providing fluid communication between said inner space and the outside of said inspection assembly, said outlet vent preferably including a one way valve, more preferably an overpressure valve.

6. The steam dryer inspection assembly according to any of the preceding claims, wherein said housing further comprising an inlet vent connectable to a fluid supply for supplying a fluid to said inner space for pressurizing and/or cooling of said inner space, said fluid preferably being a gas such as air.

7. The steam dryer inspection assembly according to any of the preceding claims, wherein said housing further comprising a camera located within said inner space and oriented towards said interface aperture, said camera preferably being a CCTV camera or video camera, more preferably a digital camera.

8. The steam dryer inspection assembly according to any of the preceding claims, wherein said inspection assembly further comprising a light source oriented towards said interface aperture, said light source preferably being located outside said cylindrical housing.

9. The steam dryer inspection assembly according to any of the preceding claims, wherein said mounting arrangement and/or said back plate define a non-right angle relative to the orientation of said housing.

10. A sight glass assembly comprising a steam dryer inspection assembly according to any of the preceding claims, wherein said housing further comprising a transparent and/or apertured front plate for covering said interface opening

11. The sight glass assembly according to claim 10, wherein said inspection assembly comprises a hollow part extending from a first end within said inner space through said front plate to a second end outside said inner space and defining an optical path between and through said first and second ends, said extension part being closed off by a transparent plate, preferably at said first end and/or said second end, said transparent plate preferably being made of temperature- and pressure resistant glass, such as borosilicate.

12. The sight glass assembly according to claim 10, wherein said front plate being at least partially made of a temperature- and pressure resistant glass, such as borosilicate.

13. A steam dryer having an enclosure enclosing a dust separation cyclone, said enclosure comprising:
an inspection aperture located adjacent said dust separation cyclone for allowing said dust separation cyclone to be visually observed, and
an sight glass assembly according to any of the claims 10-12 covering said inspection aperture

14. A steam dryer for the drying of particulate material in superheated steam having an enclosure enclosing a dust separation cyclone and a side cyclone, said side cyclone having a dust inlet and a dust outlet, said enclosure comprising:
an inspection aperture located adjacent said side cyclone for allowing said side cyclone to be visually observed, said inspection aperture preferably being located adjacent said dust inlet, more preferably above said dust inlet, and
a sight glass assembly according to any of the claims 10-12 covering said inspection aperture.

15. A method of enhancing the safety of an existing steam dryer for the drying of particulate material in superheated steam, said steam dryer having an enclosure including an inspection aperture, said inspection aperture optionally comprising a sight glass, said method comprising:
providing an inspection assembly comprising:
a housing defining an interface aperture and a user aperture opposite said interface aperture, said housing defining an inner space between said interface aperture and said user aperture,
a back plate fixated to said housing and covering said user aperture, and
a mounting arrangement, preferably a flange, extending outwardly from said housing at said
interface aperture,
covering said inspection aperture by positioning said inspection assembly so that said interface aperture is facing said inspection aperture, and,
mounting said inspection assembly onto said enclosure at said inspection aperture by using said mounting arrangement.
